Europäisches Patentamt

European Patent Office

Office européen des brevets

(11) Publication number: **0 379 749 B1**

# EUROPEAN PATENT SPECIFICATION

(45) Date of publication of patent specification: **22.06.94**  (51) Int. Cl.[5]: **C07C 303/06**, B01F 17/00

(21) Application number: **89203193.1**

(22) Date of filing: **14.12.89**

The file contains technical information submitted after the application was filed and not included in this specification

(54) **Process for preparing sulphonated dispersants.**

(30) Priority: **23.12.88 IT 2309288**

(43) Date of publication of application:
**01.08.90 Bulletin 90/31**

(45) Publication of the grant of the patent:
**22.06.94 Bulletin 94/25**

(84) Designated Contracting States:
**AT BE CH DE ES FR GB GR LI LU NL SE**

(56) References cited:
**EP-A- 0 172 543     DE-A- 2 502 255
FR-A- 858 756       FR-A- 1 380 520
GB-A- 2 159 536     US-A- 3 188 183
US-A- 3 970 690**

(73) Proprietor: **ENIRICERCHE S.p.A.**
**Corso Venezia 16**
**I-20121 Milan(IT)**

Proprietor: **SNAMPROGETTI S.p.A.**
**Corso Venezia 16**
**I-20121 Milan(IT)**

(72) Inventor: **Prevedello, Aldo**
**Via Agadir 16/A**
**I-20097 San Donato Milanese Milan(IT)**
Inventor: **Marcotullio, Armando**
**Via Trento 4**
**I-20097 San Donato Milanese Milan(IT)**
Inventor: **Platone, Edoardo**
**P.za Vittorio Veneto 7**
**I-14100 Asti(IT)**
Inventor: **Donati, Elio**
**Via Gabrielli 97**
**I-61032 Fano Pesaro(IT)**

(74) Representative: **Fusina, Gerolamo et al**
**Ing. Barzanò & Zanardo Milano S.p.A,**
**Via Borgonuovo, 10**
**I-20121 Milano (IT)**

## Description

This invention relates to a process for preparing sulphonated dispersants, the dispersants obtained in this manner and their use as fluidifying and stabilizing agents for solid dispersions in an aqueous vehicle.

Sulphonated dispersants are known in the art, consisting of sulphonated alkyl aromatic hydrocarbons or products of the condensation of naphthalene sulphonate with formaldehyde, they being able to increase the solids content and/or reduce the viscosity of solid dispersions in an aqueous vehicle.

According to the description of EP-A-172,543 sulphonated dispersants are prepared by sulphonating hydrocarbon mixtures rich in polynuclear fused ring aromatic compounds obtained as by-products in the thermal cracking of naphtha or gas oil. Specifically, the sulphonation is effected at low temperature, using sulphur trioxide as the sulphonating agent, and operating in a non-reactive solvent such as a chlorinated hydrocarbon. The drawbacks of low temperature operation in accordance with the aforesaid European patent application is basically the poor sulphonation yield.

According to GB-A-2,159,536 sulphonated dispersants are prepared by reacting sulphur trioxide with a tar or tar fraction obtained from petroleum plants. Specifically, the process is carried out at high temperature to obtain simultaneous sulphonation and oxidation of the tar in the presence of a non-reactive solvent, such as a chlorinated hydrocarbon.

The drawback of high temperature operation in accordance with the said GB patent is basically that the solvent used is not completely inert under the sulphonation conditions, so that limited quantities of harmful by-products form which contaminate the final product. It is also difficult to completely separate the solvent used from the reaction mixture, and the solvent when separated requires purification before recycling, this making the process complicated and costly.

FR-A-858 756 teaches to carry out sulphonation in $SO_2$ under controlled temperature conditions (below +5°C), using fuming sulphuric acid as the sulphonating agent, in a proportion nearly equal to that of the substrate to be sulphonated, and for a time of less than 15 min. It does not teach, however, to prepare any dispersants. In fact, it really obtains detergents rather than dispersants.

It has been found that the sulphonation of polycyclic aromatic hydrocarbons with sulphur trioxide can be conducted using liquid sulphur dioxide as reaction solvent, such sulphonation producing a high yield of useful reaction product, even when operating at low temperature.

It has also been found that the sulphonate obtained in this manner is free or substantially free of harmful impurities and has excellent fluidifying and stabilizing characteristics in aqueous solid dispersions.

In accordance therewith the present invention provides a process for preparing, from a steam-cracking-derived fuel-oil a dispersant for a high-solids aqueous dispersion of ground coal, comprising at least 75% by weight, of organic sulphonate, said process comprising the steps of:

(a) dissolving said steam-cracking-derived fuel-oil in sulphur dioxide in a pressure vessel;

(b) introducing with stirring in the solution thus obtained such an amount of sulphur trioxide as to obtain a mixture in which the weight ratio of sulphur dioxide to sulphur trioxide is from 0,5:1 to 10:1 and the weight ratio of sulphur trioxide to said steam-cracking-derived fuel-oil is from 0,8:1 to 1,5:1;

(c) controlling the temperature of the exothermically formed reaction mixture by cooling the pressure vessel;

(d) heating the reaction mixture to a temperature of from 44°C to 105°C, the minimum total time for steps (c) and (d) being 60 min;

(e) releasing the pressure in the pressure vessel and discharging the evolved sulphur dioxide;

(f) neutralizing the mixture in the pressure vessel by adding thereto a sufficient amount of an aqueous solution of an alkali metal-, alkaline earth metal-, or ammonium hydroxide and

(g) recovering the dispersant thus obtained.

The tars sulphonated by the process of the present invention are fossil coal tars such as obtained from coke ovens by high temperature coal distillation, or fractions of said tars. The term "tars" also includes fuel oil from steam cracking, ie the residual products of the high temperature steam cracking of naphtha or gas oil in petrochemical ethylene production processes, and of other light hydrocarbons. These tars consist of hydrocarbon mixtures containing at least 80% of aromatic hydrocarbons, especially alkylated, condensed ring bicyclic and tricyclic aromatic hydrocarbons. In addition about 80% of such tars distil within a temperature rage from 70-90°C to 270-290°C at 1.33 KPa (10 mm Hg.)

According to the process of the present invention the tar is dissolved in liquid sulphur dioxide and the solution obtained is brought into contact with liquid or gaseous sulphur trioxide. The reaction is conducted at a temperature in the range of 0-120°C at a pressure such as to maintain the reaction mixture in the liquid phase, and generally between 1.5 and 45 bars, with a weight ratio of sulphur trioxide to tar of between 0.8:1 and 1.5:1, the reaction mass being kept stirred. It is not convenient to operate at higher than 120°C as the characteristics of the sulphonated dispersants obtained are not completely satisfactory.

In the preferred embodiment the operating temperature is 20-100°C with a weight ratio of sulphur trioxide to tar of between 0.9:1 and 1.3:1. A weight ratio of sulphur dioxide to sulphur trioxide of between 0.5:1 and 10:1 is preferably maintained, the sulphur trioxide being fed gradually into the reaction environment. The reaction time required to obtain complete or substantially complete conversion of the sulphur trioxide varies generally from 10 to 120 minutes, and is typically of the order of 70 minutes.

On completion of sulphonation the sulphur dioxide is eliminated from the reaction mixture by lowering the pressure and if necessary passing a stream of inert gas (such as nitrogen) to remove the last sulphur dioxide traces. Conveniently, a temperature of the same order as the sulphonation temperature is maintained during the elimination of the sulphur dioxide. The sulphur dioxide separated in this manner can be recycled to the sulphonation stage after condensation, or can be fed to other uses such as to a sulphuric acid production plant. In any event, the sulphur dioxide has generally a sufficient degree of purity as not to require prior purification.

After separation of the sulphur dioxide the sulphonated tar is salified by treatment with an aqueous solution of an alkaline or alkaline-earth metal hydroxide or ammonium hydroxide. Aqueous sodium hydroxide is preferably used for this purpose, the mass being neutralized to a pH of the order of 7-9.

In this manner an aqueous solution of the sulphonated dispersant according to the present invention is obtained. This dispersant comprises (on a dry basis) 75-85% of organic sulphonate containing on average 0.35-0.50 moles of sulphonic groups per 100 g of organic sulphonate, the remainder consisting of alkaline, alkaline-earth or ammonium sulphate and sulphite, plus a small quantity of water of crystallization. Said sulphates and sulphites derive from the sulphuric and sulphurous acid which form by interaction between the sulphur trioxide and sulphur dioxide and the available water, this latter being present accidentally in the reaction environment and/or being formed by possible oxidative condensation reactions between the sulphur trioxide and the tar, or deriving from gas incompletely eliminated at the end of sulphonation.

The process of the present invention is simple and convenient, and enables a sulphonated dispersant to be obtained which is free of harmful impurities and completely water-soluble, and directly usable as a dispersant in solid dispersions in an aqueous vehicle, to reduce the viscosity of the dispersion, or to increase the quantity of solid dispersed for equal viscosities. In these applications the sulphonated dispersant of the present invention exhibits excellent fluidifying and stabilizing characteristics.

Typical dispersion examples are aqueous dispersions of coal or cement.

The following experimental examples are given to further illustrate the present invention.

In experimental examples 1 to 9 the sulphonation is applied to a fuel oil from steam cracking having a aromatic hydrocarbon content of about 84-88%, mainly as alkylated condensed ring bicyclic and tricyclic aromatic hydrocarbons, and having a density of 1.07839 g/ml at 15°C, a viscosity of 59.49 cst at 50°C and the following distillation curve at 1.33 KPa (10 mm Hg):

| | Temperature (°C) | |
|---|---|---|
| | bottom | overhead |
| initial point | 110 | 81 |
| 1% | 112 | 87 |
| 2% | 113 | 89 |
| 5% | 116 | 93 |
| 10% | 120 | 96 |
| 20% | 132 | 103 |
| 30% | 153 | 116 |
| 40% | 190 | 144 |
| 50% | 232 | 186 |
| 60% | 278 | 219 |
| 70% | 331 | 260 |
| 80% | 370 | 283 |

EXAMPLE 1

For the reaction a stainless steel pressure vessel is used, fitted with a stirrer and provided with means for heat transfer, for temperature measurement, for reactant feed and for reaction product discharge.

The pressure vessel is fed with 194 g of fuel oil from steam cracking having the above characteristics, the vessel is purged with nitrogen and 750 g of liquid sulphur dioxide are then added. 194.5 g of liquid sulphur trioxide are then fed over a period of about 12 minutes into the pressure vessel while stirring. During this period the temperature increase is controlled by circulating water through the vessel coil such that it rises from its initial 18°C to a final value of 56°C. It is then heated to 99°C over a period of 52 minutes and the temperature maintained at 99-105°C during the next 15 minutes. The maximum pressure reached in the reactor is about 32 bars.

At the end of this period, stirring is interrupted and elimination of the sulphur dioxide is commenced by lowering the pressure to atmospheric, during which the temperature falls to about 66°C.

The pressure vessel is then purged with nitrogen to remove the last traces of sulphur dioxide, while the temperature is raised to about 100°C.

Aqueous sodium hydroxide is then added to the vessel until the pH of the resultant solution is 8.5. The amount of sodium hydroxide added is 86.1 g.

In this manner 2,700 g of aqueous solution are obtained containing 323 g of organic sulphonate and 61 g of sodium sulphate and sulphite. The reaction mixture is completely soluble in water.

EXAMPLE 2

The procedure of Example 1 is followed starting with 201 g of fuel oil from steam cracking, 750 g of sulphur dioxide and 200.5 g of sulphur trioxide, with the temperature increasing from an initial 17°C to a maximum of 81°C, and with a total time of 70 minutes. After eliminating the sulphur dioxide the reaction mass is neutralized with 102.1 g of sodium hydroxide in aqueous solution.

2,204 g of an aqueous solution are obtained containing 343.1 g of organic sulphonate and 85.8 g of sodium sulphate and sulphite.

EXAMPLE 3

The procedure of Example 1 is followed starting with 198.5 g of fuel oil from steam cracking, 750 g of sulphur dioxide and 198.5 g of sulphur trioxide, with the temperature increasing from an initial 13°C to a maximum of 44°C, and with a total time of 60 minutes. After eliminating the sulphur dioxide the reaction mass is neutralized with 127 g of sodium hydroxide in aqueous solution. 2,773 g of an aqueous solution are obtained containing 369.1 g of organic sulphonate and 96.2 g of sodium sulphate and sulphite.

EXAMPLE 4

The procedure of Example 1 is followed starting with 200.7 g of fuel oil from steam cracking, 750 g of sulphur dioxide and 200.2 g of sulphur trioxide, with the temperature increasing from an initial 15°C to a maximum of 25°C, and with a total time of 74 minutes. After eliminating the sulphur dioxide the reaction mass is neutralized with 133.6 g of sodium hydroxide in aqueous solution.

2,639 g of an aqueous solution are obtained containing 359,7 g of organic sulphonate and 110,6 g of sodium sulphate and sulphite.

EXAMPLE 5

The procedure of Example 1 is followed starting with 153.1 g of fuel oil from steam cracking, 740 g of sulphur dioxide and 199 g of sulphur trioxide, with the temperature increasing from an initial 11°C to a maximum of 103°C, and with a total time of 75 minutes. After eliminating the sulphur dioxide the reaction mass is neutralized with 86.95 g of sodium hydroxide in aqueous solution.

2,717 g of an aqueous solution are obtained containing 278.2 g of organic sulphonate and 65.6 g of sodium sulphate and sulphite.

EXAMPLE 6 (comparison)

The procedure of Example 1 is followed starting with 199.6 g of fuel oil from steam cracking, 750 g of sulphur dioxide and 199.3 g of sulphur trioxide, with the temperature increasing from an initial 22°C to a maximum of 128°C, and with a total time of 89 minutes. After eliminating the sulphur dioxide the reaction mass is neutralized with 74.1 g of sodium hydroxide in aqueous solution.

4

EP 0 379 749 B1

3,734 g of an aqueous solution are obtained containing 257.4 g of organic sulphonate and 46.5 g of sodium sulphate and sulphite.

EXAMPLE 7 (comparison)

106.5 g of fuel oil from steam cracking and 106.4 g of sulphur trioxide in 449 g of tetrachloroethylene are reacted at ambient temperature (20-30°C) for 140 minutes. 65 g of sodium hydroxide in aqueous solution are added to the reaction mixture and the tetrachloroethylene is then distilled off azeotropically with the water.

1,809 g of an aqueous solution are obtained containing 84.9 g of organic sulphonate and 79.3 g of sodium sulphate.

EXAMPLE 8

The procedure of Example 1 is followed starting with 197 g of fuel oil from steam cracking, 250 g of sulphur dioxide and 196.4 g of sulphur trioxide. This latter is fed into the mixture of fuel oil and sulphur dioxide over a period of about 4 minutes. During this stage the temperature, which is initially 7°C, rises to a maximum value of 46°C. The mixture is heated to 80°C (over about 55 minutes) and this temperature is maintained for a further 20 minutes.

The sulphur dioxide is discharged and the vessel purged with nitrogen to eliminate the last traces of sulphur dioxide. An aqueous sodium hydroxide solution is then pumped into the vessel until a pH of about 8.5 is reached (quantity of 100% sodium hydroxide used 92.6 g).

In this manner 2,853 g of an aqueous solution are obtained containing 327 g of organic sulphonate.

EXAMPLE 9

The procedure of Example 8 is followed, feeding 205.7 g of fuel oil from steam cracking, 240 g of sulphur dioxide and 205 g of sulphur trioxide. On termination of the reaction the mixture is neutralized with 95.6 g of sodium hydroxide in aqueous solution.

2604.8 g of aqueous solution are finally obtained, containing 338.9 g of organic sulphonate.

EXAMPLE 10

A Polish coal having the following analysis (dry basis): volatiles 30.5%, ash 9.87%, fixed carbon (by difference) 59.98% is preground under dry conditions to obtain granules of maximum size 3 mm.

Mixtures are then prepared comprising this coal, water and an organic sulphonate taken from Examples 1-6, 8 and 9 (tests 1-6, 8 and 9). The organic sulphonate is present in a quantity of 1% by weight in each mixture.

These mixtures are wet-ground using the following grinding load:
3.2 kg of AISI 420 steel balls of diameter 31.75 mm
4.8 kg of AISI 420 steel balls of diameter 25.40 mm
3.2 kg of AISI 420 steel balls of diameter 12.70 mm
4.8 kg of AISI 420 steel balls of diameter 9.53 mm
in a mill of internal dimensions 240 x 203 mm.

1.8 kg of each mixture are ground with the jar rotating at 70 r.p.m. Grinding is carried out for 2 hours by which the average diameter of the coal particles is reduced to about 8 $\mu$m.

Viscosity measurements are carried out on the obtained dispersions at various velocity gradients using a RHEOMAT 115 CONTRAVES rotary viscometer fitted with a DIN 145 measuring head. Specifically, the dispersions are introduced into the outer cylinder of the viscometer which is temperature-controlled at 20°C, and after 3 minutes the shear stress is determined at various velocity gradients (from 0 to 150 sec$^{-1}$). The experimental values are processed using the OSTWALD power equation:

$$\tau = K.\dot{\gamma}^n$$

where:

$\tau$ =      shear stress (Pa)

$K$ =      consistency index (Pa.sec$^n$)

$\dot{\gamma}$ =      velocity gradient (sec$^{-1}$)

5

n =  Newtonian index

and using the BINGHAM equation:

$$\tau = \tau_o + \eta_B \dot{\gamma}$$

where:

$\tau$ =  shear stress (Pa)

$\tau_o$ =  flow threshold (Pa)

$\dot{\gamma}$ =  velocity gradient ($sec^{-1}$)

$\eta_B$ =  plastic viscosity (Pa.sec).

For each pair of $\tau$ and $\dot{\gamma}$ values the K and n values (OSTWALD equation) and $\eta_B\dot{\gamma}$ values (at 10 $sec^{-1}$) (BINGHAM equation) are calculated by linear regression.

Table 1 shows the following values:

CW = weight percentage of coal in the dispersion

TM = grinding time in hours

DM = mean diameter of coal particles in $\mu$m after grinding

K and n from the OSTWALD equation

$\eta_B\dot{\gamma}$ from the BINGHAM equation

TABLE 1

| Test No. | CW | TM | DM | K | n | $\eta_B\dot{\gamma}$ |
|---|---|---|---|---|---|---|
| 1 | 46.2 | 2 | 7.9 | 0.05 | 1.06 | 56 |
| 2 | 45.7 | 2 | 7.9 | 0.11 | 0.84 | 66 |
| 3 | 46.5 | 2 | 7.2 | 0.30 | 0.64 | 83 |
| 4 | 46.6 | 2 | 8.0 | 0.14 | 0.81 | 75 |
| 5 | 45.9 | 2 | 8.5 | 0.07 | 0.96 | 61 |
| 6 | 46.0 | 2 | 8.8 | 0.07 | 1.06 | 81 |
| 8 | 46.5 | 2 | 7.9 | 0.042 | 1.07 | 49.0 |
| 9 | 47.7 | 2 | 8.3 | 0.063 | 1.09 | 78.0 |

The dispersions obtained in the said tests 1-6, 8 and 9 are mixed with preground Polish coal (tests 1′-6′, 8′ and 9′) and the resultant mixtures, containing 0.5 wt% of the organic sulphonate, are subjected to finishing treatment for some minutes in a rod mill followed by homogenization in a mixer. Aqueous dispersions are obtained in this manner, and are subjected to viscosity measurements in the previously indicated manner.

Table 2 shows the following values:

CW = weight percentage of coal in the dispersion

TM = grinding time in minutes

DM = mean diameter of coal particles in $\mu$m after grinding

TSD = dynamic stability time in minutes (time for which the shear stress at 10 $sec^{-1}$ in a 200 g sample stirred at 1000 r.p.m. remains less than double the initial value)

pH of the final dispersion

K, n and $\eta_B\dot{\gamma}$ from the OSTWALD and BINGHAM equations

TABLE 2

| Test No. | CW | TM | DM | TSD | pH | K | n | $\overset{\bullet}{\eta_B\gamma}$ |
|---|---|---|---|---|---|---|---|---|
| 1′ | 65.9 | 8 | 16.0 | 90 | 7.21 | 2.85 | 0.79 | 1376 |
| 2′ | 65.7 | 9 | 15.4 | 180 | 7.38 | 2.44 | 0.82 | 1326 |
| 3′ | 65.7 | 10 | 16.9 | 60 | 7.40 | 2.53 | 0.81 | 1303 |
| 4′ | 65.8 | 10 | 16.5 | 70 | 7.37 | 2.66 | 0.81 | 1377 |
| 5′ | 65.5 | 10.5 | 15.1 | 105 | 7.41 | 2.35 | 0.84 | 1344 |
| 6' | stable dispersion not obtained | | | | | | | |
| 8′ | 66.7 | 10 | 16.3 | 180 | 7.54 | 1.901 | 0.90 | 1380 |
| 9′ | 66.7 | 12 | 17.2 | 170 | 7.53 | 1.815 | 0.93 | 1458 |

The dispersions obtained in tests 1′-5′, 8′ and 9′ are subjected (tests 1″-5″, 8″, and 9″) to stirring at 450 r.p.m. and viscosity measurements are carried out on the thus treated dispersions in the manner previously indicated. The results of these determinations are given in Table 3 together with the stirring time in minutes.

TABLE 3

| Test No. | Stirring time | K | n | $\overset{\bullet}{\eta_B\gamma}$ |
|---|---|---|---|---|
| 1″ | 30 | 3.58 | 0.74 | 1451 |
|  | 90 | 3.77 | 0.71 | 1355 |
| 2″ | 90 | 4.47 | 0.66 | 1343 |
|  | 180 | 5.60 | 0.61 | 1377 |
| 3″ | 30 | 2.68 | 0.78 | 1255 |
| 4″ | 30 | 2.83 | 0.76 | 1250 |
| 5″ | 60 | 2.32 | 0.78 | 1091 |
|  | 105 | 2.47 | 0.75 | 1099 |
| 8″ | 90 | 1.684 | 0.87 | 1069 |
|  | 180 | 1.849 | 0.82 | 1012 |
| 9″ | 85 | 1.555 | 0.91 | 1138 |
|  | 170 | 1.897 | 0.86 | 1174 |

EXAMPLE 11

The procedure of Example 10 is followed using the organic sulphonate of Examples 1-6 and a beneficiated Colombian coal of the following analysis (dry basis): volatiles 39.45%, ash 4.32%, fixed carbon (by difference) 56.23% by weight.

The results of these tests are given in Tables 4, 5 and 6, which have the same significance as Tables 1, 2 and 3 respectively.

TABLE 4

| Test No. | CW | TM | DM | K | n | $\overset{\bullet}{\eta_B\gamma}$ |
|---|---|---|---|---|---|---|
| 1 | 45.7 | 2 | 8.8 | 0.05 | 1.28 | 121 |
| 2 | 45.4 | 2 | 8.9 | 0.08 | 1.18 | 138 |
| 3 | 45.3 | 2 | 7.1 | 0.11 | 1.12 | 162 |
| 4 | 45.7 | 2 | 9.1 | 0.16 | 1.06 | 193 |
| 5 | 44.6 | 2 | 8.8 | 0.12 | 1.06 | 139 |
| 6 | 45.0 | 2 | 9.0 | 10.8 | 0.35 | 830 |

TABLE 5

| Test No. | CW | TM | DM | TSD | pH | K | n | $\eta_{B\dot{\gamma}}$ |
|---|---|---|---|---|---|---|---|---|
| 1′ | 59.6 | 10 | 15.4 | 140 | 5.78 | 1.34 | 0.93 | 1059 |
| 2′ | 59.6 | 10 | 15.8 | 145 | 5.78 | 1.15 | 0.81 | 1051 |
| 3′ | 59.9 | 10 | 15.2 | 120 | 5.87 | 1.21 | 0.98 | 1123 |
| 4′ | 59.7 | 10 | 16.4 | 70 | 5.97 | 1.67 | 0.89 | 1160 |
| 5′ | 59.6 | 11 | 16.5 | 90 | 5.60 | 2.94 | 0.77 | 1332 |
| 6′ | stable dispersion not obtained | | | | | | | |

TABLE 6

| Test No. | Stirring time | K | n | $\eta_{B\dot{\gamma}}$ |
|---|---|---|---|---|
| 1″ | 70 | 2.49 | 0.75 | 1055 |
| | 140 | 3.35 | 0.67 | 1067 |
| 2″ | 90 | 1.84 | 0.81 | 948 |
| | 165 | 1.94 | 0.77 | 985 |
| 3″ | 60 | 1.95 | 0.83 | 1073 |
| 4″ | 30 | 2.73 | 0.77 | 1224 |
| 5″ | 45 | 3.43 | 0.70 | 1188 |
| | 90 | 3.37 | 0.69 | 1127 |

From the preceding results it can be concluded that aqueous coal dispersions fluidified by the organic sulphonates of the present invention are properly fluid and pumpable.

**Claims**

1. A process for preparing, from a steam-cracking-derived fuel-oil a dispersant for a high-solids aqueous dispersion of ground coal, comprising at least 75% by weight, of organic sulphonate, said process comprising the steps of:

    (a) dissolving said steam-cracking-derived fuel-oil in sulphur dioxide in a pressure vessel;

    (b) introducing with stirring in the solution thus obtained such an amount of sulphur trioxide as to obtain a mixture in which the weight ratio of sulphur dioxide to sulphur trioxide is from 0,5:1 to 10:1 and the weight ratio of sulphur trioxide to said steam-cracking-derived fuel-oil is from 0,8:1 to 1,5:1;

    (c) controlling the temperature of the exothermically formed reaction mixture by cooling the pressure vessel;

    (d) heating the reaction mixture to a temperature of from 44°C to 105°C, the minimum total time for steps (c) and (d) being 60 min;

    (e) releasing the pressure in the pressure vessel and discharging the evolved sulphur dioxide;

    (f) neutralizing the mixture in the pressure vessel by adding thereto a sufficient amount of an aqueous solution of an alkali metal-, alkaline earth metal-, or ammonium hydroxide and

    (g) recovering the dispersant thus obtained.

2. Process according to Claim 1, wherein said dispersant consists of from 75% to 85% of an organic sulphonate containing from 0,35 mol to 0,50 mol of sulphonic groups per 100 g of organic sulphonate, the balance being composed of alkali metal-, alkaline earth metal- or ammonium sulphates and sulphites and a minor amount of crystallization water.

3. Process according to Claim 1, wherein the temperature in step (d) is from 70°C to 100°C.

4. Process according to Claim 1, wherein said fuel oil derived from steam cracking has an aromatics content of from 84% to 88% by weight, said aromatics content predominantly consisting of alkylated condensed-ring bicyclic and tricyclic aromatics.

5. Process according to Claim 1, wherein the weight ratio of sulphur dioxide to sulphur trioxide is from 0,5:1 to 5:1 and the weight ratio of sulphur trioxide to said steam-cracking-derived fuel-oil is from 0,9:1 to 1,3:1.

6. Process according to Claim 1, wherein step (e) is carried out at the same temperature as in step (d).

7. Process according to Claim 6, wherein step (e) is carried out in an inert gas environment.

8. Process according to Claim 1, wherein step (f) is carried out with an aqueous solution of NaOH, neutralization being continued until the pH of the mixture is from 7 to 9.

**Patentansprüche**

1. Verfahren zur Herstellung eines Dispergiermittels aus einem durch Dampfcracken erhaltenen Heizöl für eine feststoffreiche wäßrige Dispersion von gemahlener Kohle, welches Dispergiermittel wenigstens 75 Gew.-% organisches Sulfonat umfaßt, welches Verfahren die folgenden Stufen umfaßt:
   (a) Auflösen des vom Dampfcracken erhaltenen Heizöls in Schwefeldioxid in einem Druckgefäß;
   (b) Einführen einer derartigen Menge Schwefeltrioxid in die solcherart erhaltene Lösung unter Rühren, daß ein Gemisch erhalten wird, worin das Gewichtsverhältnis von Schwefeldioxid zu Schwefeltrioxid von 0,5:1 bis 10:1 beträgt und das Gewichtsverhältnis von Schwefeltrioxid zu dem vom Dampfcracken abgeleiteten Heizöl von 0,8:1 bis 1,5:1 beträgt;
   (c) Regeln der Temperatur des exothermen Reaktionsgemisches durch Kühlen des Druckgefäßes;
   (d) Erwärmen des Reaktionsgemisches auf eine Temperatur von 44°C bis 105°C, wobei die Mindestgesamtzeit für die Stufen (c) und (d) 60 min beträgt;
   (e) Ablassen des Drucks im Druckgefäß und Abziehen des entwickelten Schwefeldioxids;
   (f) Neutralisieren des Gemisches im Druckgefäß durch Zusetzen einer ausreichenden Menge einer wäßrigen Lösung eines Alkalimetall-, Erdalkalimetall- oder Ammoniumhydroxids und
   (g) Gewinnen des solcherart erhaltenen Dispergiermittels.

2. Verfahren nach Anspruch 1, worin das Dispergiermittel aus 75% bis 85% eines organischen Sulfonats mit einem Gehalt an 0,35 Mol bis 0,50 Mol Sulfonsäuregruppen je 100 g organisches Sulfonat besteht, während der Rest aus Alkalimetall-, Erdalkalimetall- oder Ammoniumsulfaten und -sulfiten und einer kleinen Menge Kristallisationswasser besteht.

3. Verfahren nach Anspruch 1, worin die Temperatur in Stufe (d) von 70°C bis 100°C beträgt.

4. Verfahren nach Anspruch 1, worin das vom Dampfcracken abgeleitete Heizöl einen Aromatengehalt von 84 bis 88 Gew.-% aufweist, welcher Aromatengehalt überwiegend aus alkylierten ringkondensierten bicyclischen und tricyclischen Aromaten besteht.

5. Verfahren nach Anspruch 1, worin das Gewichtsverhältnis von Schwefeldioxid zu Schwefeltrioxid von 0,5:1 bis 5:1 beträgt und das Gewichtsverhältnis von Schwefeltrioxid zu dem vom Dampfcracken abgeleiteten Heizöl von 0,9:1 bis 1,3:1 beträgt.

6. Verfahren nach Anspruch 1, worin die Stufe (e) bei der gleichen Temperatur wie in Stufe (d) ausgeführt wird.

7. Verfahren nach Anspruch 6, worin die Stufe (e) in einer Inertgasumgebung ausgeführt wird.

8. Verfahren nach Anspruch 1, worin die Stufe (f) mit einer wäßrigen NaOH-Lösung ausgeführt wird, wobei die Neutralisation fortgeführt wird, bis der pH-Wert des Gemisches 7 bis 9 beträgt.

**Revendications**

1. Procédé de préparation, à partir d'une huile combustible obtenue par vapocraquage, d'un dispersant destiné à des dispersions aqueuses de charbon broyé à haute teneur en matières solides, comportant au moins 75 % en poids de sulfonates organiques, ledit procédé comportant les étapes consistant à :

(a) dissoudre ladite huile combustible obtenue par vapocraquage dans du dioxyde de soufre, dans une cuve à pression ;

(b) introduire dans la solution ainsi obtenue, tout en agitant, une quantité de trioxyde de soufre telle que l'on obtienne un mélange dans lequel le rapport pondéral du dioxyde de soufre au trioxyde de soufre vaut de 0,5/1 à 10/1 et le rapport pondéral du trioxyde de soufre à ladite huile combustible obtenue par vapocraquage vaut de 0,8/1 à 1,5/1 ;

(c) maîtriser la température du mélange réactionnel, dont la formation est exothermique, en refroidissant la cuve à pression ;

(d) chauffer le mélange réactionnel à une température valant de 44°C à 105°C, la durée minimale totale des étapes (c) et (d) valant 60 minutes ;

(e) relâcher la pression dans la cuve à pression et évacuer le dioxyde de soufre qui se dégage ;

(f) neutraliser le mélange dans la cuve à pression, en y ajoutant une quantité suffisante d'une solution aqueuse d'hydroxyde de métal alcalin, de métal alcalino-terreux ou d'ammonium ; et

(g) récupérer le dispersant ainsi obtenu.

2. Procédé conforme à la revendication 1, dans lequel ledit dispersant est constitué, pour 75 % à 85 %, de sulfonates organiques contenant de 0,35 à 0,50 moles de groupes sulfoniques pour 100 g de sulfonates organiques, le reste étant composé de sulfites et sulfates de métal alcalin, de métal alcalino-terreux ou d'ammonium et d'une petite quantité d'eau de cristallisation.

3. Procédé conforme à la revendication 1, dans lequel la température, au cours de l'étape (d), vaut de 70°C à 100°C.

4. Procédé conforme à la revendication 1, dans lequel ladite huile combustible obtenue par vapocraquage contient de 84 % à 88 % en poids de composés aromatiques, qui sont en majorité des composés aromatiques alkylés bicycliques et tricycliques à noyaux condensés.

5. Procédé conforme à la revendication 1, dans lequel le rapport pondéral du dioxyde de soufre au trioxyde de soufre vaut de 0,5/1 à 5/1 et le rapport pondéral du trioxyde de soufre à ladite huile combustible obtenue par vapocraquage vaut de 0,9/1 à 1,3/1.

6. Procédé conforme à la revendication 1, dans lequel on réalise l'étape (e) à la même température que l'étape (d).

7. Procédé conforme à la revendication 6, dans lequel on réalise l'étape (e) sous une atmosphère de gaz inerte.

8. Procédé conforme à la revendication 1, dans lequel on réalise l'étape (f) avec une solution aqueuse de NaOH, et on poursuit la neutralisation jusqu'à ce que le pH du mélange vaille de 7 à 9.